Europäisches Patentamt

(19) European Patent Office

Office européen des brevets

(11) Publication number: **0 072 219**
**B1**

(12) **EUROPEAN PATENT SPECIFICATION**

(45) Date of publication of patent specification: **19.11.87**

(51) Int. Cl.⁴: **G 06 F 12/06**

(21) Application number: **82304153.8**

(22) Date of filing: **05.08.82**

(54) Memory addressing system.

(30) Priority: **06.08.81 JP 122448/81**
**28.09.81 JP 153384/81**

(43) Date of publication of application:
**16.02.83 Bulletin 83/07**

(45) Publication of the grant of the patent:
**19.11.87 Bulletin 87/47**

(84) Designated Contracting States:
**DE FR GB IT NL**

(56) References cited:
**EP-A-0 014 581**
**US-A-3 395 392**
**US-A-3 516 070**

**Second Euromicro Symposium on**
**Microprocessing and Microprogramming**
**October 1976, Venice (IT), DUPUY:"A**
**Multiprocessor System based on a**
**multibus/multiport oriented memory**
**configuration", pp. 191-195**

(73) Proprietor: **Kabushiki Kaisha Toshiba**
**72, Horikawa-cho Saiwai-ku**
**Kawasaki-shi Kanagawa-ken 210 (JP)**

(72) Inventor: **Takatoshi, Ishii c/o Patent Division**
**Tokyo Shibaura Denki K.K. 72 Horikawa-cho**
**Saiwai-ku Kawasaki-shi Kanagawa-ken (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

(56) References cited:
**EDN ELECTRICAL DESIGN NEWS, vol. 25, no. 7,**
**April 1980, pages 133-135, Denver, US S.**
**STROM: "Multiplexed-memory technique**
**doubles muP's addressing capacity"**

**ELECTRONIC DESIGN, vol. 26, no. 9, April 1978,**
**pages 84-92, Rochelle Park, US; FIELLAND et**
**al.: "Keep the memory interface simple**
**between dynamic RAMs and a muP. Use the**
**right timing and refresh, and you won't have to**
**trade off much performance for cost"**

0 072 219

**Description**

The present invention relates to memory addressing systems.

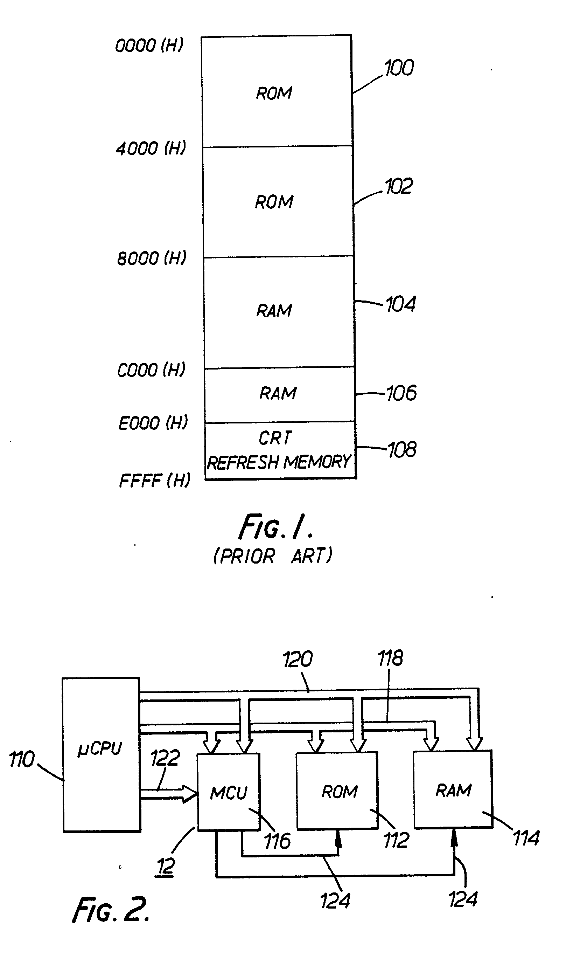

Typically, computer processors have a certain maximum number of bits with which to specify an address. This set of addresses defines an address space in which peripherals to the processor must be placed. Thus, in the prior art, read only memories (ROM's), random access memories (RAM's) and the CRT refresh memory associated with a processor have address spaces allocated within the address space of the processor. Figure 1 shows a typical example of a memory map obtained by a typical allocation of processor address space. As illustrated in the drawing, addresses from 0000 HEX to 4000 HEX are allocated to 16K bytes of ROM 100, addresses from 4000 HEX to 8000 HEX to 16K bytes of ROM 102, addresses from 8000 HEX to C000 HEX to 16K bytes of RAM 104, addresses from C000 HEX to E000 HEX to 8K bytes of RAM 106, and addresses from E000 HEX to FFFF HEX to CRT or monitor refresh memory 108. In total, the addressable memory is 64K bytes, the maximum number of bytes addressable with 16 bits of information.

Recently, the length and complexity of software has markedly increased, so an address space of nearly 64K bytes may be required simply for operation of a program. Thus, ROM's 100 and 102 and RAM's 104 and 106 would have to be expanded to take up the entire 64K byte memory space.

The number of pixels included in a CRT display has also increased as the requirement for higher resolution of displays has increased. To store this increased number of pixels, an addressable memory space of nearly 16K bytes is needed for CRT refresh memory 108. This is likely to be the minimum memory capacity that will be necessary for future graphic displays.

However, the addressable space accessable by processor is physically limited by the number of address bits that can be handled. A conventional processor can handle 16 address bits which can individually address no more than 64K bytes of memory. This results in severe restrictions in system design.

There have been proposals for example, "D1" EDN Electrical Design News, Volume 25, No. 7, April 1980, pages 133—135, STROM: "Multiplexed-memory technique doubles µP's addressing capacity" shows at Figure 1 a logic permitting to select two memories A or B in dependence of Read of Write signals. In one mode 2 (set by an I/O port) RAM A is read and RAM B is written; in a mode 3 RAM A is written and RAM B is read; in a mode 1 (or 4) only one of the memories is read and written.

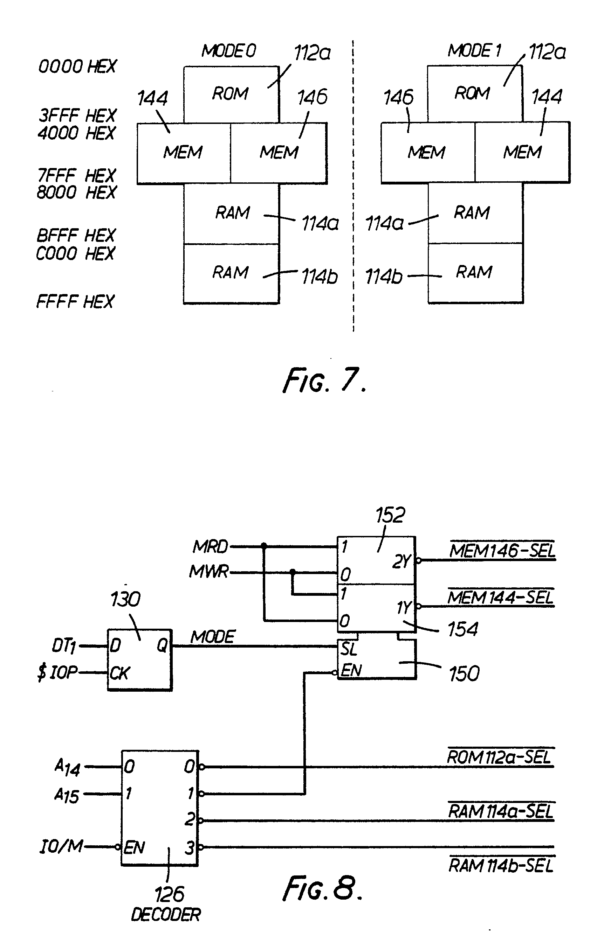

Also, "D2", Electronic Design, Volume 26, No. 9, April 1978, pages 84—92, Frielland: "Keep the memory interface simple", shows (Figure 8C) a combination of read/write module switching for different modes (start up/steady state) with module addressing (i 8205), but without module address switching in dependence of the different modes.

While "D3", Second Euromicro Symposium on microprocessing and microprogramming, October 12—14, 1976, Venice, pages 191—195, Dupuy a.o.: "A Multiprocessor system based on a multibus/multiport oriented memory configuration", (Figures 1 and 2) shows module address switching.

The present invention seeks to improve a memory addressing system which has a substantially enlarged addressable memory space.

According to one aspect of the invention a memory addressing system comprises: a first memory; a second memory; means for addressing the first and second memories, each address corresponding to one memory location in both the first and second memories; and means for selecting one of the first and second memories when data is to be read and the other of the first and second memories when data is to be written; characterised in that there is provided a third memory; the selecting means includes means for selecting: the third memory in response to a second memory address signal, one of the first and second memories in response to both a first memory address signal and a read signal, and the other of said first and second memories in response to both the first memory address signal and a write signal during a first mode of operation; and the first memory in response to the first memory address signal, and the second memory in response to the second memory address signal during a second mode of operation; and the system includes means for instituting either one of the first and second modes of operation.

According to a further aspect of the invention, a memory addressing system comprises: a first memory; a second memory; means for addressing the first and second memories, each address corresponding to one memory location in both the first and second memories; and means for selecting one of the first and second memories when data is to be read and the other of the first and second memories when data is to be written; characterised in that there is provided a third memory; the selecting means including means for selecting one of the first and second memories in response to a first memory address signal and a read signal, the other of the first and second memories in response to both the first memory address signal and a write signal, and for selecting the third memory in response to a second memory address signal, during a first mode of operation; and the second memory in response to said second memory address signal during a second mode of operation; and the system further comprises means for instituting either one of said first and second modes of operation.

According to still a further aspect of the invention a memory addressing system comprises: a first memory; a second memory; means for addressing the first and second memories, each address corresponding to one memory location in both the first and second memories; and means for selecting one of the first and second memories when data is to be read and the other of the first and second memories when data is to be written; characterised in that the second memory is a read/write memory; the system

2

**0 072 219**

further comprises a third memory; the selecting means including means for selecting the first memory in response to a first memory address signal and a read signal, and said second memory in response to the first memory address signal and a write signal; and for selecting the third memory in response to a second memory address signal during a first mode of operation, and the third memory in response to the memory address signal and a write signal, and the second memory in response to the memory address signal and a read signal in a second mode of operation; and the system including means for instituting either one of said first and second modes of operation.

A number of preferred embodiments of the invention will now be described by way of example and with reference to the accompanying drawings, in which:

Figure 1 shows a prior art memory map;

Figure 2 is a block diagram of a memory addressing system;

Figure 3 shows a memory map useful for understanding the invention;

Figure 4 is a circuit diagram of a memory selection circuit for the embodiment of Figure 3;

Figure 5 shows a memory map according to an embodiment of the invention;

Figure 6 is a circuit diagram of a memory selection circuit for the embodiment of Figure 5;

Figure 7 shows a memory map useful for understanding the invention;

Figure 8 is a circuit diagram of a memory selection circuit for the embodiment of Figure 7;

Figure 9 shows a memory map according to a further embodiment of the present invention;

Figure 10 is a circuit diagram of a memory selection circuit for the embodiment of Figure 9;

Figure 11 shows a memory map according to a still further embodiment of the present invention; and

Figure 12 is a circuit diagram of a memory selection circuit for the embodiment of Figure 11.

Referring to Figure 2, a microprocessor CUP 110 interfaces with a read only memory (ROM) 112 and a random access memory (RAM) 114 through a memory control unit (MCU) 116. Part of the RAM 114 functions as a CRT refresh memory. The ROM 112 and the RAM 114 are directly connected to the CPU 110 through an address bus 118 and a data bus 120. RAM 114 has a capacity of 32K bytes and ROM 112 has a capacity of 32K bytes, giving a total memory capacity of 64K bytes.

Control line 122 propagates a control signal generated by the CPU 110 to memory control unit 116. After memory control unit 116 has received this signal through control line 122, it supplies memory control signals to ROM 112 and RAM 114 through control lines 124. The details of the internal construction of memory control unit 116 will be explained hereinafter.

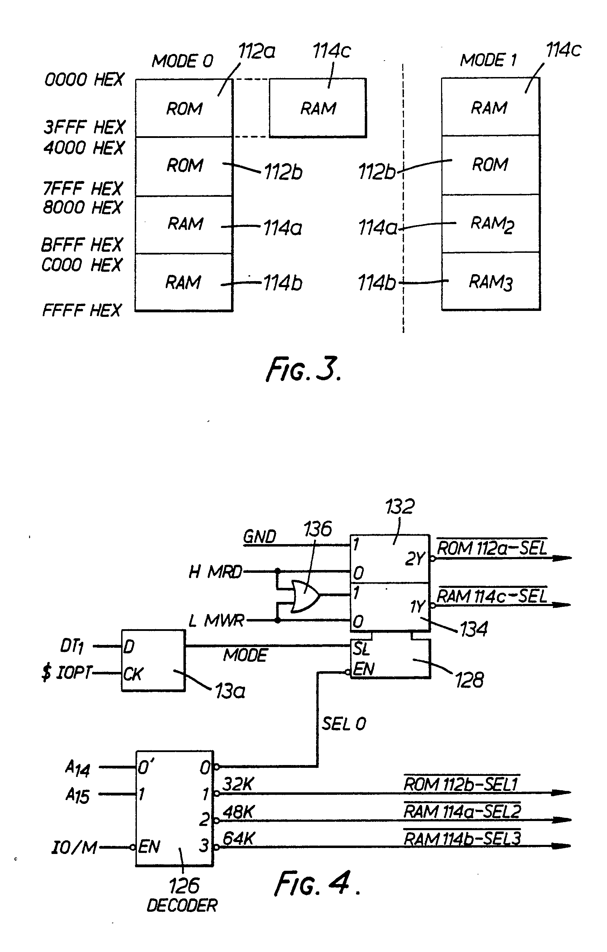

Figure 3 is a memory map showing a logical arrangement of memory useful for understanding the invention. The addressable memory space of 64K bytes is divided into four areas of 16K bytes. The memories which are included in this addressable memory space differ depending on which of two possible modes (mode "0" or mode "1") is preset. Changeover between these modes is accomplished by a mode selection circuit, which will be described later (Figure 4).

In this embodiment, RAM 114c and ROM 112a are allocated to addresses 0000 HEX—3FFF HEX and are "multiplexed" in the address space. The RAM 114c may be, for example, a refresh memory for a CRT. When the CPU 110 executes a program, data can only be read from ROM 112a and ROM 112b. Ordinarily, the most common operation to be performed by RAM 114c is the storing of data to be displayed on the CRT. A technique, independent of CPU 110 (e.g., direct memory access), is employed to transfer data from RAM 114c to the CRT. Thus, under normal conditions, CPU 110 will only write data into RAM 114c. Consequently, normally, the address space is in mode "0" and the program stored in ROM 112a and ROM 112b is performed through a series of read operations. If data is to be stored in RAM 114c, software enables the data to be written into RAM 114c in mode "0". Apart from this, ordinary access operations may be performed with respect to ROM 112b, RAM 114a, and RAM 114b whatever the mode.

In this way, even though the memory space is 64K bytes, the whole space can be used as program memory, and the 16K bytes of the CRT memory can also be used. Thus a total memory capacity of 80K bytes is available, so the available memory space has been effectively expanded.

However, occasionally it will be necessary for CPU 110 to read from RAM 114c (e.g., to check what is being displayed), so that a technique for reading data must also be provided. To accomplish reading, the address space is temporarily put into mode "1". This prevents the accessing of ROM 112a while enabling the accessing (either reading or writing) of RAM 114c. Consequently, software may then be provided such that CPU 110 carries out a read operation in a conventional manner.

Care must be taken if the program in ROM 112 is to read-access RAM 114c since in mode "1" accessing of ROM 112a is prevented. However, mode "1" operation does not normally require a long time, so that the mode changeover need not be performed long before RAM 114c is to be read. By providing a subroutine in ROM 112b in which RAM 114c is read, read access can effectively and simply be carried out when the program in ROM 112a requires a read access from RAM 114c. Thus software limitations can be easily overcome.

An embodiment of a mode selection circuit for carrying out the mode changeover of the address space will now be explained with reference to Figure 4. In Figure 4, the uppermost address bits, A14 and A15 of the 16-bit address, are supplied to decoder 126. The enable terminal EN of decoder 126 is supplied with a status signal that indicates whether the program step calls for a memory input or a memory output to be performed. It is well known that this is a signal that is generated at the beginning of every machine cycle, so that an explanation of it will be omitted. Decoder 126 detects which memory 112 or 114 is to be accessed

3

and outputs this information as selection signals SEL 0—SEL 3 at the respective output terminals 0, 1, 2 or 3. 16K bytes of memory are associated with each of output terminals 1—3, namely ROM 112a or RAM 114c, ROM 112b, RAM 114a and RAM 114b, respectively. The signal SEL 0 that is outputted from the output terminal 0 of decoder 126 is supplied to the enable EN of selector 128.

A data signal DT1, which is indicative of the desired operating mode is applied to the D input terminal of mode selection flip-flop 130 by an output command of CPU 110. A timing signal, SIOPT of the memory cycle is inputted to the clock input terminal C of mode selection flip-flop 130. The data signal DT1 is "High" in mode 0 and "Low" in mode 1. The Q output of mode selection flip-flop 130 is supplied to the selector terminal SL of a gate selector 128. The input terminal 1 of gate 132 which is part of selector 128 is grounded, and the signal MRD that indicates that memory reading is in progress is supplied from the CPU 110 to the input terminal 0. The input terminal 1 of gate 134 of the selector 128 is supplied with the output of OR gate 136, which receives as inputs the signal MRD and a signal MWR. The signal MWR indicates that a memory write operation is in progress. The input terminal 0 is supplied with signal MWR, from the CPU 110. The selector 128 enables either gate 132 or 134 in accordance with the content of mode selection flip-flop 130. In this embodiment of the invention, the output of gate 132 selects ROM 112a, and the output of gate 134 is provided to RAM 114c.

The operation of the circuit shown in Figure 4 is explained below for mode 0 and mode 1 with reference to Table 1 which illustrates the operation of the gate selector 128.

TABLE 1

| | $\overline{EN}$ | SL | MRD | MWR | RAM 114c-$\overline{SEL}$ | ROM 112a-$\overline{SEL}$ |
|---|---|---|---|---|---|---|
| Mode 0 | 0 | 1 | 0 | 0 | 1 | 1 |
| | 0 | 1 | 0 | 1 | 0 | 1 |
| | 0 | 1 | 1 | 0 | 1 | 0 |
| | 1 | 1 | X | X | 1 | 1 |
| Mode 1 | 0 | 0 | 0 | 0 | 1 | 1 |
| | 0 | 0 | 0 | 1 | 0 | 1 |
| | 0 | 0 | 1 | 0 | 0 | 1 |
| | 1 | 0 | X | X | 1 | 1 |

During normal operation, i.e., in mode 0, the CPU 110 causes the mode data signal DT1 to be "High". Consequently, the mode setting signal MODE (see Figure 4) is "High". When the address bits A14 and A15 are both low, the SEL 0 output of decoder 126 is enabled, thus enabling the selector 128.

While a program is being read out from ROM 112a, since a read cycle is occurring, the read-out control signal MRD is "High", and the writing control signal MWR is "Low". Consequently 132 of the selector 128 is "LOW" and the output of gate 134 is "HIGH" so the ROM 112a is selected. As a result, the program is read out from ROM 112a. When RAM 114c is to be refreshed, a write cycle is required. Thus the control signal MWR is "HIGH" and the read-out control signal MRD is "LOW". As a result, the output of gate 134 of the selector 128 is enabled so that RAM 114 is selected. A writing operation is therefore performed on RAM 114c.

In mode 1, the RAM 114c may be read so as to check its contents. To enter this mode, the CPU 110 makes the mode data signal DT1 "LOW". Thus, the mode setting signal, MODE is "LOW". When addresses A14 and A15 are also "LOW", the selector 128 is enabled. As the contents of the RAM 114c are read out, the read-out control signal MRD is "HIGH" and the writing control signal MWR is "LOW". Consequently, the output of gate 132 of selector 128 is "HIGH", and the output of gate 134 is "LOW", so that RAM 114c is selected. As a result, the display pattern of character pattern is read out from the CRT refresh RAM 114c.

Thus, in mode 0, when gate 132 of selector 128 is selected, since its input is given by the read-indicating signal MRD only, ROM 112a can only be read. If gate 134 is selected in mode 1, since both the MRD and MWR signals are inputted through OR gate 136, RAM 114c can both be read and written into.

The accessing of addresses beyond 4000 HEX is performed by the decoder 126. This may be accomplished as in known systems, and an explanation thereof is therefore omitted.

It will be appreciated that by means of the mode selection circuit of Figure 4, the entire 64K byte memory space can be utilized as program memory, and in addition, 16K bytes of RAM 114c can be accessed. This makes it possible for a total memory capacity of 80K bytes, i.e., an expansion of memory space can be achieved.

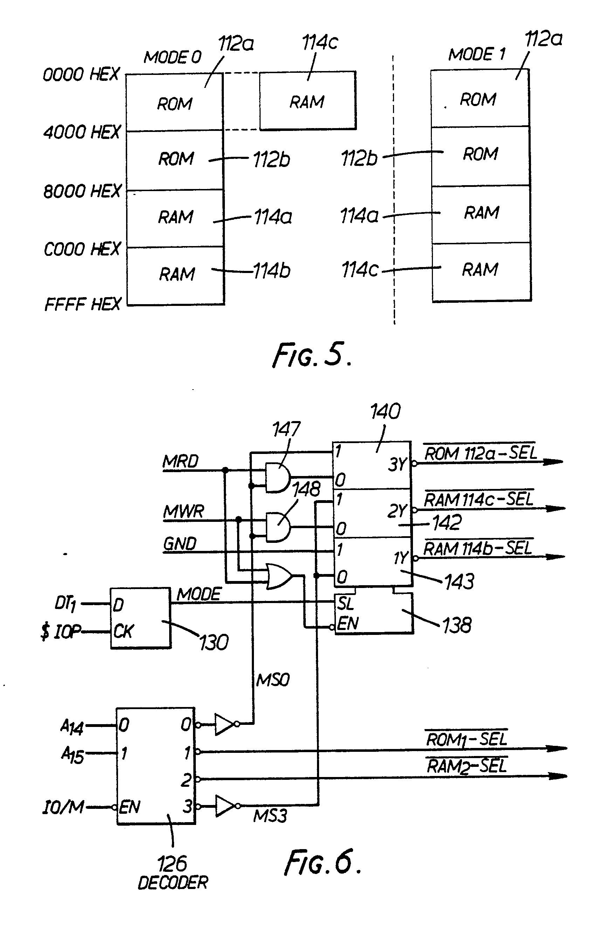

The above explanation was based on the address space of the memory map shown in Figure 3. Embodiments of arrangements of the address space according to the invention are shown in Figures 5, 9 and 11 and embodiments of the corresponding mode selection circuits are shown in Figures 6, 10 and 12, respectively.

First a brief explanation will be given of the structure and operation of the mode selection circuit shown in Figure 6 using the truth table of Table 2 and the memory map shown in Figure 5.

TABLE 2

| MODE | MS0 | MS3 | SL | MRD | MWR | RAM 114b-SEL | RAM 144c-SEL | ROM 112a-SEL |
|---|---|---|---|---|---|---|---|---|
| MODE 0 | 1 | 0 | 1 | 0 | 0 | 1 | 1 | 1 |
|  | 1 | 0 | 1 | 0 | 1 | 1 | 0 | 1 |
|  | 1 | 0 | 1 | 1 | 0 | 1 | 1 | 0 |
|  | 0 | 1 | 1 | 0 | 0 | 1 | 1 | 1 |
|  | 0 | 1 | 1 | 0 | 1 | 0 | 1 | 1 |
|  | 0 | 1 | 1 | 1 | 0 | 0 | 1 | 1 |
|  | 0 | 0 | 1 | X | X | 1 | 1 | 1 |
| MODE 1 | 1 | 0 | 0 | 0 | 0 | 1 | 1 | 1 |
|  | 1 | 0 | 0 | 0 | 1 | 1 | 1 | 0 |
|  | 1 | 0 | 0 | 1 | 0 | 1 | 1 | 0 |
|  | 0 | 1 | 0 | 0 | 0 | 1 | 1 | 1 |
|  | 0 | 1 | 0 | 0 | 1 | 1 | 0 | 1 |
|  | 0 | 1 | 0 | 1 | 0 | 1 | 0 | 1 |
|  | 0 | 0 | 0 | X | X | 1 | 1 | 1 · |

In this embodiment, as in the preceding embodiment, either of two memory maps is realized depending on the ON/OFF state of the mode selection flip-flop 130. In the first of these modes, mode 0, ROM 112a and RAM 114c are located in the same address space, a read operation by the CPU 110 will access ROM 112a, and a write operation will access RAM 114c. The other mode, mode 1, is obtained when mode selection flip-flop 130 is set. In this mode, RAM 114b cannot be accessed by CPU 110. Instead, RAM 114c is placed in this area of the address space. In this manner, the CPU 110 can both read from and write to RAM 114c. Also in mode 1, the ROM 112a is accessable as normal.

Usually, the CPU 110 only reads from ROM 112a, and writes into display RAM 114c. Thus, programs may usually be run normally even when, as in mode 0, the addresses overlap. In this way the memory space can be expanded.

However, since the CPU 110 may occasionally wish to read from RAM 114c, a way must be provided to read, for example, "what letter is being displayed" or "what kind of dot pattern is being displayed". Furthermore, the RAM 114c may be used as a message buffer. To allow for such cases, in mode 1 RAM 114c can be placed in the address space occupied by RAM 114b in mode 0, so that RAM 114c can be read from and written in a normal fashion. The mode selection circuit of Figure 5 is an example of a circuit which can perform this form of control.

The circuit of Figure 5 differs from the circuit of Figure 4 in that the selector 138 has three gate stages, 140, 142 and 143 which have different transfer functions as illustrated in Table 2. The circuit also incorporates AND gates 147 and 148 which interact with the selector 138.

Figure 7 differs from Figure 3 by this substitution of memories 144 and 146 in the address space occupied by ROM 112b in Figure 3. The memory 144 may be thought of as a program storage memory and the memory 146 may be thought of as a display memory. The memory 144 may be RAM, so that a program stored in memory 144 may be changed. However, the memory 144 normally contains a program, and the CPU 110 normally reads the program and runs it, so in almost all cases memory 144 need only be read. However, if the program content is to be changed, data must be written into memory 144. The memory 146

**0 072 219**

normally only has display data written into it by CPU 110, but sometimes it is necessary to check the letters or patterns that are being displayed, and in such cases a read operation is also necessary. Thus, memory 144 may be termed a "mainly READ memory" and memory 146 may be termed a "mainly WRITE memory". Consequently, if memories 144 and 146 are simply permanently assigned to the same address space with fixed "READ" and "WRITE" operation respectively, the less common, although required functions of these memories could not be performed. Thus, the CPU 110 must be able to read and write to both of the memories.

A memory map shown in Figure 7 and mode selection circuit shown in Figure 8 are also useful for understanding the present invention. This embodiment also has modes 0 and 1. In mode 0, memories 144 and 146 have their respective ordinary functions and occupy the same address space as read-only and write-only memories. In mode 1, a control is applied to change memory 144 over to enable write operations and memory 146 over to enable read operations.

Thus, in mode 0, memories 144 and 146 operate so as to effectively increase the memory space, as if they were separate memories. Yet memories 144 and 146 overlap on the same address space, with data being read from memory 144 and data being written into memory 146. However, in special cases (when mode 1 is entered), these read and write functions are interchanges so that data can be written into memory 144 and data can be read from memory 146.

The operation of the mode selection circuit illustrated in Figure 8 for controlling the memory configuration illustrated in Figure 7 will now be described with reference to Table 3.

**TABLE 3**

| | $\overline{EN}$ | SL | MRD | MWR | $\overline{MEM\ 144\text{-}SEL}$ | $\overline{MEM\ 146\text{-}SEL}$ |
|---|---|---|---|---|---|---|
| MODE 0 | 0 | 1 | 0 | 0 | 1 | 1 |
| | 0 | 1 | 0 | 1 | 1 | 0 |
| | 0 | 1 | 1 | 0 | 0 | 1 |
| MODE 1 | 0 | 0 | 0 | 0 | 1 | 1 |
| | 0 | 0 | 0 | 1 | 0 | 1 |
| | 0 | 0 | 1 | 0 | 1 | 0 |
| | 1 | X | X | X | 1 | 1 |

In normal operation, i.e., mode 0, the mode data signal DT1 generated by the CPU 110 is "HIGH". Consequently, the mode setting signal MODE is "HIGH". When the address line A14 is "HIGH" and line A15 is "LOW", the selector 150 is enabled. When a program is to be read out from memory 144, since a read cycle is in progress, the read control signal MRD is "HIGH" and the write control signal MWR is "LOW". Consequently, the output of gate 152 of the selector 150 is "HIGH" and the output of gate 154 is "LOW", so that the memory 144 is selected and the program is read out.

When it is desired to write to the memory 146, since a write cycle is in progress, the write control signal MWR is "HIGH" and the read control signal MRD is "LOW". Consequently, the output of the gate 152 of the selector 150 is "LOW" and the output of the gate 154 is "HIGH", so that the memory 146 is selected and the write operation can be performed thereon.

In mode 1, a program is loaded into memory 144 or data stored in memory 146 is read. To enter this mode 1, the mode-designating signal DT1 from the CPU 110 is "LOW". Consequently, the mode setting signal MODE is "LOW". When the address line A14 is "HIGH" and the address A15 is "LOW" the selector 150 is enabled. When loading a program, the machine is in the write cycle for memory 144, so the write control signal MWR is "HIGH" and the read control signal MRD is "LOW". Consequently, the output of gate 152 of the selector 150 is "HIGH" and the output of gate 154 is "LOW" so that the memory 144 is selected and the program is loaded into the memory 144.

Also, when the machine is in the read cycle in mode 1, the read control signal MRD is "HIGH" and the write control signal MWR is "LOW". Consequently, the output of gate 152 of selector 150 is "LOW" and the output of gate 154 is "HIGH". The memory 146 is therefore selected and the data stored in memory 146 is read.

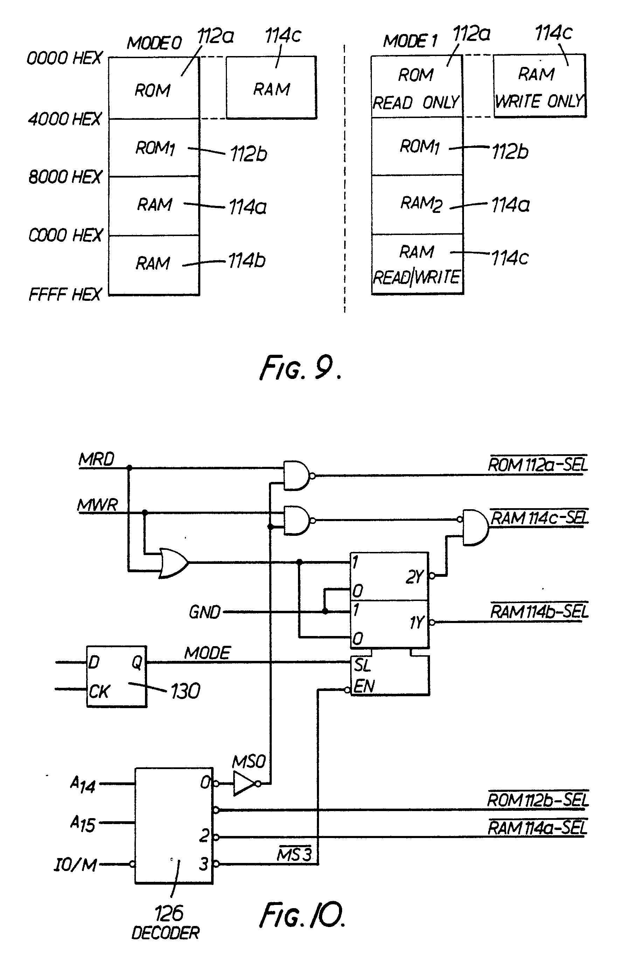

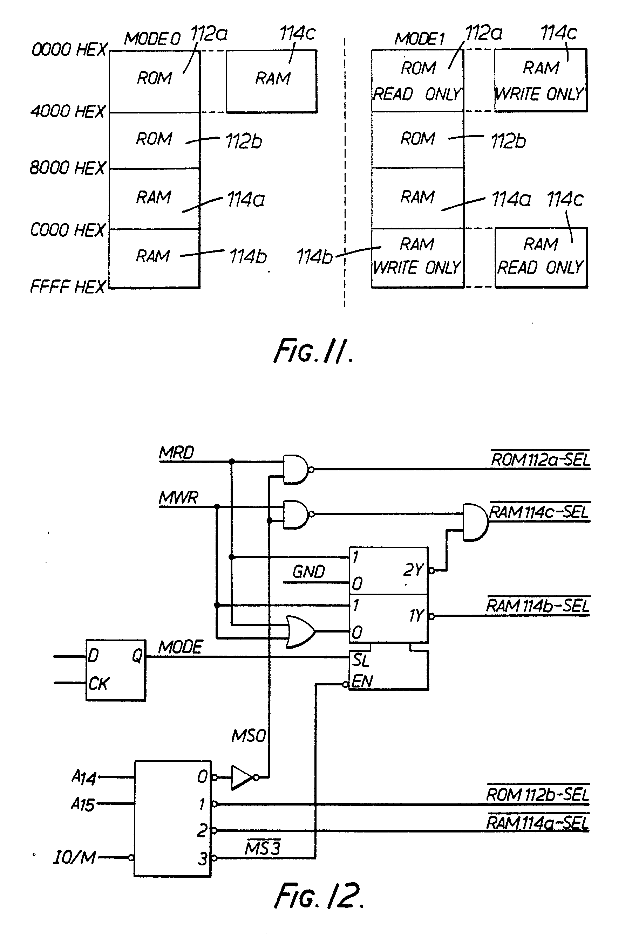

According to an embodiment of the invention a mode selection circuit for controlling the memory map of Figure 9 is shown in Figure 10 and the circuit for controlling the memory map of Figure 11 is shown in Figure 12.

The circuit shown in Figure 10 operates in accordance with the truth table shown in Table 4 below.

6

TABLE 4

| MODE | MS0 | $\overline{MS3}$ | SL | $\overline{MRD}$ | MWR | $\overline{\text{RAM 114b-}}$ SEL | $\overline{\text{RAM 114c-}}$ SEL | $\overline{\text{ROM 112a-}}$ SEL |
|---|---|---|---|---|---|---|---|---|
| MODE 0 | 1 | 1 | 1 | 0 | 0 | 1 | 1 | 1 |
| | 1 | 1 | 1 | 0 | 1 | 1 | 0 | 1 |
| | 1 | 1 | 1 | 1 | 0 | 1 | 1 | 0 |
| | 0 | 0 | 1 | 0 | 0 | 1 | 1 | 1 |
| | 0 | 0 | 1 | 0 | 1 | 0 | 1 | 1 |
| | 0 | 0 | 1 | 1 | 0 | 0 | 1 | 1 |
| | 0 | 1 | 1 | X | X | 1 | 1 | 1 |
| MODE 1 | 1 | 1 | 0 | 0 | 0 | 1 | 1 | 1 |
| | 1 | 1 | 0 | 0 | 1 | 1 | 0 | 1 |
| | 1 | 1 | 0 | 1 | 0 | 1 | 1 | 0 |
| | 0 | 0 | 0 | 0 | 0 | 1 | 1 | 1 |
| | 0 | 0 | 0 | 0 | 1 | 1 | 0 | 1 |
| | 0 | 0 | 0 | 1 | 0 | 1 | 0 | 1 |
| | 0 | 1 | 0 | X | X | 1 | 1 | 1 |

Table 4 may be summarized as follows. In either mode 0 or 1, when the read indicating signal (MRD) and decoder output MSO are at "HIGH" level (address bits A14 and A15 are both "LOW"), ROM 112a is selected and the required program is read out from ROM 112a. In either mode 0 or 1, when the decoder output MSO is "HIGH", and the write-designating signal (MWR) from the CPU 110 is "HIGH", RAM 114c is accessed. Also, when mode 0 is set while $\overline{MS3}$ is "LOW" (addresses A14 and A15 both "HIGH"), RAM 114b is selected when either MRD or MWR arrive. If the mode is set to mode 1 and MS3 is "LOW", when either MRD or MWR arrive, RAM 114c is selected.

The further circuit according to another embodiment of the invention and shown in Figure 12 operates according to the truth table shown in Table 5, given below.

# 0 072 219

TABLE 5

| MODE | MSO | $\overline{MS3}$ | SL | MRD | MWR | $\overline{RAM\ 114b\text{-}SEL}$ | $\overline{RAM\ 114c\text{-}SEL}$ | $\overline{ROM\ 112a\text{-}SEL}$ |
|---|---|---|---|---|---|---|---|---|
| MODE 0 | 1 | 1 | 1 | 0 | 0 | 1 | 1 | 1 |
| | 1 | 1 | 1 | 0 | 1 | 1 | 0 | 1 |
| | 1 | 1 | 1 | 1 | 0 | 1 | 1 | 0 |
| | 0 | 0 | 1 | 0 | 0 | 1 | 1 | 1 |
| | 0 | 0 | 1 | 0 | 1 | 0 | 1 | 1 |
| | 0 | 0 | 1 | 1 | 0 | 0 | 1 | 1 |
| | 0 | 1 | 1 | X | X | 1 | 1 | 1 |
| MODE 1 | 1 | 1 | 0 | 0 | 0 | 1 | 1 | 1 |
| | 1 | 1 | 0 | 0 | 1 | 1 | 0 | 1 |
| | 1 | 1 | 0 | 1 | 0 | 1 | 1 | 0 |
| | 0 | 0 | 0 | 0 | 0 | 1 | 1 | 1 |
| | 0 | 0 | 0 | 0 | 1 | 0 | 1 | 1 |
| | 0 | 0 | 0 | 1 | 0 | 1 | 0 | 1 |
| | 0 | 1 | 0 | X | X | 1 | 1 | 1 |

Table 5 may be summarized as follows: In either mode 1 or 2, when the decoder output MS0 is "HIGH", ROM 112a is selected by an MRD signal, and RAM 114c is selected by an MWR signal. In mode 0, ROM 112a can only be read from and RAM 114c can only be written to. However, data can be either written to or read from RAM 114b.

In mode 1, data can be either written to or read from RAM 114c. Thus, when $\overline{MS3}$ is "LOW" and an MRD signal arrives, RAM 114c may be read from. When MSO line is "HIGH" and MWR is "HIGH", RAM 114c may be written to. In mode 1, RAM 114b can only be written to when $\overline{MS3}$ is "LOW" and an MWR signal arrives.

**Claims**

1. A memory addressing system comprising:
a first memory (112a);
a second memory (114c);
means (110) for addressing the first and second memories, each address corresponding to one memory location in both the first and second memories; and
means (110, 116) for selecting one of the first and second memories when data is to be read and the other of the first and second memories when data is to be written;
characterised in that there is provided a third memory (114b);
the selecting means (110, 116) includes means (126, 140, 142, 143, 138, 147, 148) for selecting: the third memory in response to a second memory address signal, one (112e) of the first and second memories in response to both a first memory address signal and a read signal (MRD), and the other (114c) of said first and second memories in response to both the first memory address signal and a write signal (MWR) during a first mode of operation; and the first memory in response to the first memory address signal, and the second memory in response to the second memory address signal during a second mode of operation; and
the system includes means (110, 116, 130) for instituting either one of the first and second modes of operation.

2. A memory addressing system comprising:
a first memory (112a);
a second memory (114c);
means (110, 116) for addressing the first and second memories, each address corresponding to one memory location in both the first and second memories; and

8

means (110, 116) for selecting one of the first and second memories when data is to be read and the other of the first and second memories when data is to be written; characterised in that there is provided a third memory (114b);

the selecting means (110, 116) including means (Figure 10) for selecting one (112a) of the first and second memories in response to a first memory address signal and a read signal (MRD), the other (114c) of the first and second memories in response to both the first memory address signal and a write signal (MWR), and for selecting the third memory in response to a second memory address signal, during a first mode of operation; and the second memory in response to said second memory address signal during a second mode of operation; and

the system further comprises means (110, 116, 130) for instituting either one of said first and second modes of operation.

3. A memory addressing system comprising:

a first memory (112a);

a second memory (114c);

means (110, 116) for addressing the first and second memories, each address corresponding to one memory location in both the first and second memories; and

means (110, 116) for selecting one of the first and second memories when data is to be read and the other of the first and second memories when data is to be written; characterised in that the second memory is a read/write memory;

the system further comprises a third memory (114b);

the selecting means (110, 116) including means (Figure 12) for selecting the first memory in response to a first memory address signal and a read signal (MRD), and said second memory in response to the first memory address signal and a write signal (MWR); and for selecting the third memory in response to a second memory address signal during a first mode of operation, and the third memory in response to the second memory address signal and a write signal, and the second memory in response to the second memory address signal and a read signal in a second mode of operation; and

the system including means (110, 116, 130) for instituting either one of said first and second modes of operation.

4. A memory addressing system as claimed in claim 1 or 2, wherein the second memory (114c) is a read/write memory.

5. A memory addressing system as claimed in claim 4, wherein said second memory (114c) comprises a CRT refresh memory.

6. A memory addressing system as claimed in claim 1 or 3, wherein the means for selecting and means for instituting comprises:

decoding means (126) for selecting the first and second memories;

a flip-flop (130) for generating a mode setting signal representing a selected mode of operation; and

selecting means (140—142, 143, 147, 148, Figure 10, Figure 12), responsive to the flip-flop and the decoding means, for selecting either one of the first and second memories in response to the mode setting signal and a read/write signal.

7. A memory addressing system as claimed in claim 1, 2 or 3, wherein the third memory (114b) is a read/write memory.


**Patentansprüche**

1. Speicheradressiersystem, mit

— einem ersten Speicher (112a),
— einem zweiten Speicher (114c),
— Mitteln (110) zum Adressieren der ersten und zweiten Speicher, wobei jede Adresse einem Speizherplatz in sowohl dem ersten als auch dem zweiten Speicher zugeordnet ist, und
— Mitteln (110, 116) zur Auswahl eines der ersten und zweiten Speicher, wenn Daten ausgelesen werden sollen, und des anderen der ersten und zweiten Speicher, wenn Daten eingespeichert werden sollen, dadurch gekennzeichnet,
— daß ein dritter Speicher (114b) vorgesehen ist,
— daß die Auswahlmittel (110, 116) aufweisen Mittel (126, 140, 142, 143, 138, 147, 148) zur Auswahl: Des dritten Speichers in Abhängigkeit von einem zweiten Speicheradressensignal, einem (112a) der ersten und zweiten Speicher an Abhängigkeit von sowohl einem ersten Speicheradressensignal und einem Lesesignal (MRD), und des anderen (114c) der ersten und zweiten Speicher in Abhängigkeit sowohl von dem ersten Speicheradressensignal als auch einem Schreibsignal (MWR) während einer ersten Betriebs-Mode und des ersten Speichers in Abhängigkeit von dem ersten Speicheradressensignal und des zweiten Speichers in Abhängigkeit von dem zweiten Speicheradressensignal während einer zweiten Betriebs-Mode,
— wobei das System Mittel (110, 116, 130) zur Bildung entweder der ersten oder der zweiten Betriebs-Mode aufweist.

9

2. Speicheradressiersystem, mit

— einem ersten Speicher (112a),
— einem zweiten Speicher (114c),
— Mitteln (110, 116) zum Adressieren der ersten und zweiten Speicher, wobei jede Adresse einem Speicherplatz in sowohl dem ersten als auch dem zweiten Speicher entspricht, und
— Mitteln (110, 116) zur Auswahl eines der ersten und zweiten Speicher, wenn Daten ausgelesen werden sollen, und des anderen der ersten und zweiten Speicher, wenn Daten eingespeichert werden sollen, dadurch gekennzeichnet,
— daß ein dritter Speicher (114b) vorgesehen ist,
— daß die Auswahlmittel (110, 116) Mittel (Fig. 10) zur Auswahl eines (112a) der ersten und zweiten Speicher in Abhängigkeit von einem ersten Speicheradressensignal und einem Lesesignal (MRD), des anderen (114c) der ersten und zweiten Speicher in Abhängigkeit von dem ersten Speicheradressensignal und einem Schreibsignal (MWR), und zur Auswahl des dritten Speichers in Abhängigkeit von einem zweiten Speicheradressensignal während einer ersten Betriebs-Mode, und des zweiten Speichers in Abhängigkeit von dem zweiten Speicheradressensignal während einer zweiten Betribes-Mode, und
— daß das System darüberhinaus Mittel (110, 116, 130) zur Bildung einer der ersten und zweiten Betriebs-Modes aufweist.

3. Speicheradressiersystem, mit

— einem ersten Speicher (112a),
— einem zweiten Speicher (114c),
— Mitteln (110, 116) zum Adressieren der ersten und zweiten Speicher, wobei jede Adresse einem Speicherplatz in sowohl dem ersten als auch dem zweiten Speicher entspricht, und
— Mitteln (110, 116) zur Auswahl eines der ersten und zweiten Speicher, wenn Daten gelesen werden sollen, und des anderen der ersten und zweiten Speicher, wenn Daten eingeschrieben werden, sollen, dadurch gekennzeichnet,
— daß der zweite Speicher ein Schreib/Lesespeicher ist,
— daß das System darüberhinaus einen dritten Speicher (114b) aufweist,
— daß die Auswahlmittel (110, 116) Mittel (Fig. 12) zur Auswahl des ersten Speichers in Abhängigkeit von einem ersten Speicheradressensignal und einem Lesesignal (MRD) und des zweiten Speichers in Abhängigkeit von dem ersten Speicheradressensignal und einem Schreibsignal (MWR) und zur Auswahl des dritten Speichers in Abhängigkeit von einem zweiten Speicheradressensignal während einer ersten Betriebs-Mode und des dritten Speichers in Abhängigkeit von einem zweiten Speicheradressensignal und einem Schreibsignal und des zweiten Speichers in Abhängigkeit von dem zweiten Speicheradressensignal und einem Lesesignal in einer zweiten Betriebs-Mode aufweist, und
— daß das System Mittel (110, 116, 130) zur Bildung einer der beiden ersten und zweiten Betriebs-Modes aufweist.

4. Speicheradressiersystem nach Anspruch 1 oder 2, dadurch gekennzeichnet, daß der zweite Speicher (114c) ein Lese/Schreibspeicher ist.

5. Speicheradressiersystem nach Anspruch 4, dadurch gekennzeichnet, daß der zweite Speicher (114c) ein elektrostatischer Speicher ist.

6. Speicheradressiersystem nach Anspruch 1 oder 3, dadurch gekennzeichnet, daß die Mittel zur Auswahl und Mittel zur Bildung der Betriebs-Modes aufweisen:

— Dekodiermittel (126) zur Auswahl der ersten und zweiten Speicher,
— einen Flip-Flop (130) zur Erzeugung eines Mode-Einstellsignals, das einen ausgewählten Betriebs-Mode repräsentiert, und
— Auswahlmittel (140—142, 143, 147, 148, Fig. 10, Fig. 12), die auf den Flip-Flop und die Dekodiermittel ansprechen und einen der ersten und zweiten Speicher in Abhängigkeit von dem Mode-Einstellsignal und einem Lese/Schreibsignal auswählen.

7. Speicheradressiersystem nach Anspruch 1, 2 oder 3, dadurch gekennzeichnet, daß der dritte Speicher (114b) ein Lese/Schreibspeicher ist.

**Revendications**

1. Système d'adressage de mémoire qui comprend une première mémoire (112a); une seconde mémoire (114c); des moyens (110) pour accéder aux adresses de la première et de la seconde mémoires, chaque adresse correspondant à un emplacement de la première et de la deuxième mémoires; et des moyens (110, 116) pour sélectionner l'une de ces deux mémoires quand des données doivent être lues et l'autre d'entre elles quand des données doivent être inscrites; caractérisé en ce qu'il est prévu une troisième mémoire (114b); en ce que les moyens de sélection (110, 116) comprenent des moyens (126, 140, 142, 143, 138, 147, 148) pour sélectionner la troisième mémoire en réponse à un signal d'adresse de la seconde mémoire, l'une des deux premières mémoires (112a, 114c) en réponse à un signal d'adresse de la première mémoire et d'un signal de lecture (MRD), et l'autre de ces deux mémoires en réponse au signal d'adresse de la première mémoire et d'un signal d'écriture (MWR) durant un premier mode de fonctionnement; et la première mémoire en réponse au signal d'adresse de première mémoire, et la seconde mémoire en réponse au signal d'adresse de seconde mémoire durant un second mode de fonctionnement; et en ce que le système inclut également des moyens (110, 116, 130) pour instituer soit le premier, soit le second mode de fonctionnement.

2. Système d'adressage de mémoire qui comprend une première mémoire (112a); une seconde mémoire (114c); des moyens (110, 116) pour accéder à une adresse de ces deux mémoires, chaque adresse correspondant à un emplacement de l'une de ces deux mémoires; et des moyens (110, 116) pour sélectionner l'une de ces deux mémoire quand des données doivent être lues et l'autre d'entre elles quand des données doivent être écrites; caractérisé en ce qu'il est prévu une troisième mémoire (114b); en ce que les moyens de sélection (110, 116) comportent des moyens pour sélectionner l'une (112a) de ces deux mémoires en réponse à un signal d'adresse de première mémoire et à un signal de lecture (MRD), l'autre (114c) de ces deux mémoires en réponse à un signal d'adresse de première mémoire et un signal d'écriture, et pour sélectionner la troisième mémoire en réponse à un signal d'adresse de seconde mémoire, durant un premier mode de fonctionnement; et la seconde mémoire en réponse audit signal d'adresse de seconde mémoire durant un second mode de fonctionnement; le système comprenant également des moyens (110, 116, 130) pour établir soit le premier, soit le second mode de fonctionnement.

3. Système d'adressage de mémoire qui comprend une première mémoire (112a); une seconde mémoire (114c); des moyens (110, 116) pour accéder aux adresses de la première et de la seconde mémoires; et des moyens (110, 116) pour sélectionner l'une de ces deux mémoires quand des données doivent être lues et l'autre d'entre elles quand des données doivent être inscrites, caractérisé en ce que la seconde mémoire est une mémoire lecture/écriture; en ce que le système comprend également une troisième mémoire (114b); en ce que les moyens de sélection (110, 116) incluent des moyens pour sélectionner la première mémoire en réponse à un signal d'adresse de première mémoire et à un signal de lecture (MRD), et la seconde mémoire en réponse à un signal d'adresse de première mémoire et à un signal d'écriture (MWR); et pour sélectionner la troisième mémoire en réponse à un signal d'adresse de seconde mémoire durant un premier mode de fonctionnement, et la troisième mémoire en réponse à un signal d'adresse de seconde mémoire et à un signal d'écriture, et la seconde mémoire en réponse à un signal d'adresse de seconde mémoire et d'un signal de lecture pendant le second mode de fonctionnement; et en ce que le système comporte aussi des moyens (110, 116, 130) pour établir soit le premier, soit le second mode de fonctionnement.

4. Système d'adressage de mémoire selon l'une ou l'autre des revendicatimns 1 ou 2, caractérisé en ce que la seconde mémoire (114c) est une mémoire vive (lecture/écriture).

5. Système d'adressage de mémoire selon la revendication 4, caractérisé en ce que la seconde mémoire (114c) est une mémoire de remise à jour de tube cathodique d'affichage ou de moniteur.

6. Système d'adressage de mémoire selon la revendication 1 ou 3, caractérisé en ce que les moyens de sélection et les moyens d'institution ou détablissement de mode comprennent des moyens de décodage (126) pour sélectionner les deux premières mémoires; une bascule (130) pour générer un signal d'établissement de mode représentant un mode de fonctionnement sélectionné; et, des moyens de sélection (140—142, 143, 147, 148) répondant à la bascule et aux moyens de décodage en sélectionnant l'une ou l'autre des deux premières mémoires en réponse au signal d'établissement de mode et à un signal de lecture ou d'écriture.

7. Système d'adressage de mémoire selon l'une quelconque des revendications 1, 2 ou 3 caractérisé en ce que la troisième mémoire est une mémoire vive ou de lecture/écriture (114b).

0000 (H)

ROM ———100

4000 (H)

ROM ———102

8000 (H)

RAM ———104

C000 (H)

RAM ———106

E000 (H)

CRT
REFRESH MEMORY ———108

FFFF (H)

### Fig. 1.
(PRIOR ART)

### Fig. 2.

FIG. 3.

FIG. 4.

*FIG. 5.*

*FIG. 6.*

FIG. 7.

FIG. 8.

4

0 072 219

FIG. 9.

FIG. 10.

FIG. 11.

FIG. 12.